# EUROPEAN PATENT APPLICATION

(11) **EP 2 299 587 A2**
(43) Date of publication of application: **23.03.2011**
(21) Application number: 10154139.9
(22) Date of filing: 19.02.2010
(51) Int. Cl.: H02P 29/02

(54) **Motor drive device capable of detecting a fault condition**

(30) Priority: 18.09.2009 JP 2009217648
(71) Applicant: OMRON Automotive Electronics Co., Ltd., Komaki, Aichi 485-0802 (JP)
(72) Inventor: Kuratani, Shinichi, Kyoto-shi, Kyoto 600-8530 (JP); Nakamura, Takenobu, Kyoto-shi, Kyoto 600-8530 (JP); Yabuguchi, Michisada, Kyoto-shi, Kyoto 600-8530 (JP); Hamasaki, Masamitsu, Kyoto-shi, Kyoto 600-8530 (JP)
(74) Representative: Wilhelms · Kilian & Partner Patentanwälte

(57) **Abstract**

This invention provides a motor drive device capable of detecting an ON fault of upper stage switching elements and lower stage switching elements for all of phases even when using a single current detection unit. A control unit (102) for outputting a PWM signal to a drive unit (101) includes an upper stage regeneration abnormality determination unit (103) and a lower stage regeneration abnormality unit (104). The upper stage regeneration abnormality unit (103) determines that ON fault occurred in at least one of lower stage switching elements (Q2, Q4, Q6) when current flowed to a current detection resistor (R) in an upper stage regeneration state in which upper stage switching elements (Q1, Q3, Q5) are all in an ON state. The lower stage regeneration abnormality unit (104) determines that ON fault occurred in at least one of upper stage switching elements (Q1, Q3, Q5) when current flowed to the current detection resistor (R) in a lower stage regeneration state in which lower stage switching elements (Q2, Q4, Q6) are all in the ON state.

## Description

### BACKGROUND OF THE INVENTION

### 1. TECHNICAL FIELD

The present invention relates to motor drive devices using a PWM (Pulse Width Modulation) control method and, in particular, to a motor drive device for detecting a current value of each phase using a single current detection unit.

### 2. RELATED ART

In an electric power steering device of a vehicle, an electric motor such as a three-phase brushless motor is arranged to provide a steering auxiliary force corresponding to steering torque of a handle to a steering mechanism. A motor drive device by the PWM control method is known as a device for driving the motor (e.g., Japanese Unexamined Patent Publication No. 2007-244133).

In the motor drive device of the PWM control method, three sets of a pair of upper and lower arms having switching elements on the upper arm and the lower arm are arranged. A target value of a current to be flowed to the motor according to the steering torque detected by a torque sensor is calculated, and a PWM signal having a predetermined duty is generated based on the deviation between the target value and the value of the current that actually flows to the motor. The motor is driven based on an ON/OFF operation of each switching element by the PWM signal.

In the motor drive device of Japanese Unexamined Patent Publication No. 2007-244133, a current detection resistor (shunt resistor) for detecting the current flowing to the motor is arranged at the lower arm of each phase. In other words, three current detection resistors are arranged, and the current that actually flows to the motor is detected by measuring the voltage at both ends of each resistor. In contrast, a motor drive device using a signal current detection resistor is known (e.g., Japanese Unexamined Patent Publication No. 2009-131098).

Fig, 14 shows one example of a motor drive device of a PWM control method using a single current detection resistor. A power supply circuit 1 is configured by a rectifying circuit, a smoothing circuit, and the like, and has a capacitor C connected to an output end, A switching circuit 2 is configured by three-phase bridge in which three sets of the pair of upper and lower arms are arranged in correspondence to a U-phase, a V-phase, and a W-phase, An upper arm A1 of the U-phase includes a switching element Q1, and a lower arms2 of the U-phase includes a switching element Q2. An upper arm A3 of the V-phase includes a switching element Q3, and a lower arm A4 of the V-phase includes a switching element Q4. An upper arm A5 of the W-phase includes a switching element Q5, and a lower arm A6 of the W-phase includes a switching element Q6. Such switching elements Q1 to Q6 include an FET (Field Effect Transistor), for example.

A motor M is a three-phase brushless motor used in an electric power steering device of a vehicle. A current detection resistor R for detecting the current flowing to the motor M is connected between the power supply circuit 1 and the switching circuit 2. An amplifier circuit 5 configured by a differential amplifier and the like amplifies the voltage at both ends of the current detection resistor R, and outputs the same to a CPU 4. The CPU 4 calculates a duty set value corresponding to the duty of the PWM signal of each phase based on the detected current value calculated based on the voltage provided from the amplifier circuit 5, and a target current value calculated based on steering torque provided from a torque sensor (not shown). The PWM signal of each phase generated based on the duty set value and a saw tooth-shaped carrier signal is then provided to a driver IC3. The driver IC3 outputs the PWM signal of each phase for individually turning ON/OFF the switching elements Q1 to Q6 to a gate of each of the switching element Q1 to Q6. The three-phase voltage is supplied from the switching circuit 2 to the motor M by the ON/OFF of the switching elements Q1 to Q6 based on such a PWM signal, so that the motor M rotates,

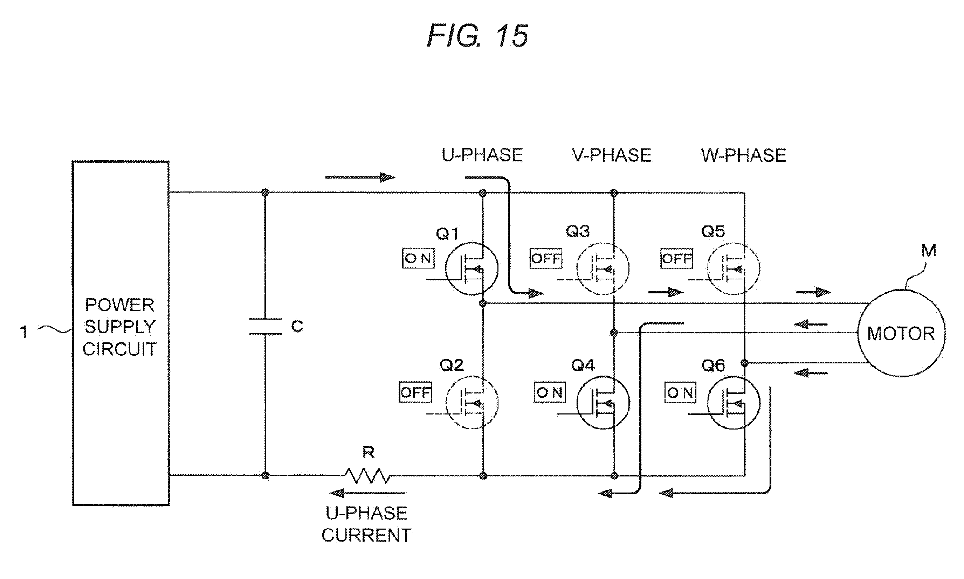

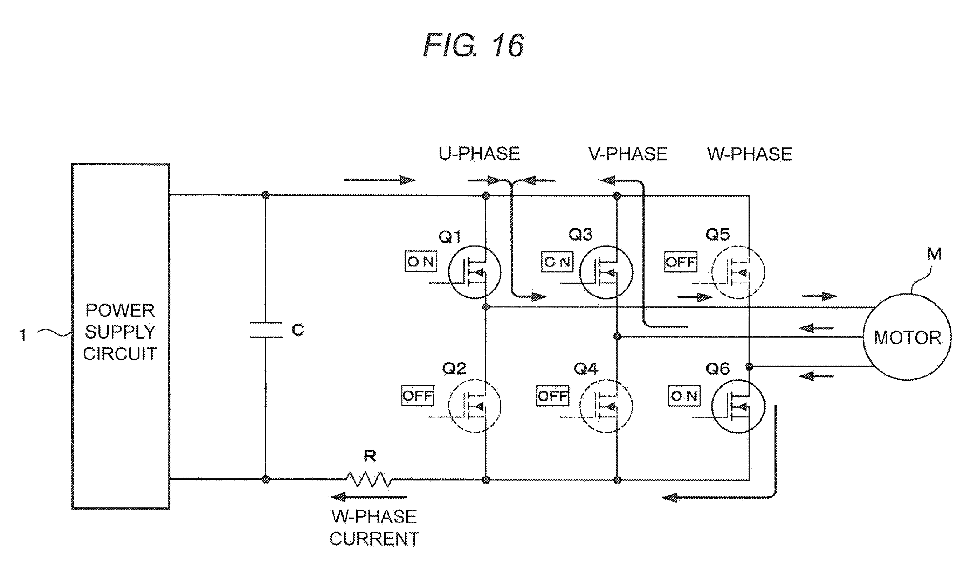

In the case of the motor drive device using the single current detection resistor R as described above, the detection of the current flowing to the motor M is carried out by detecting a U-phase current in a circuit state of Fig. 15, and detecting a W-phase current in a circuit state of Fig. 16. Here, the U-phase is the largest phase in which the duty is the largest, the V-phase is the intermediate phase in which the duty is intermediate, and the W-phase is the smallest phase in which the duty is the smallest.

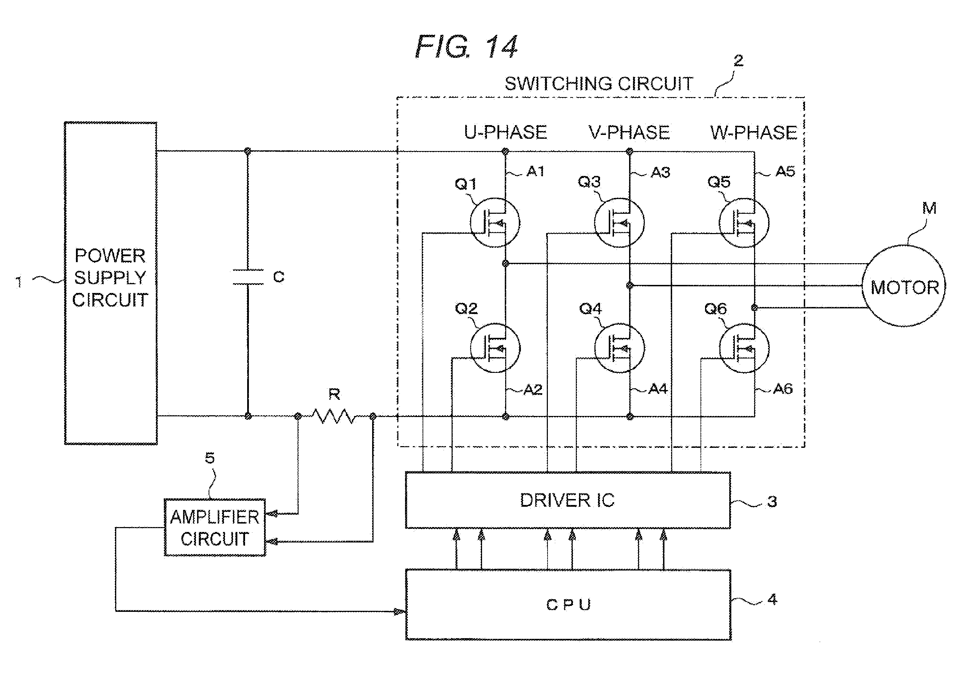

As shown in Fig. 15, the detection of the U-phase current is carried out in a period in which the switching elements of the upper arm (hereinafter referred to as "upper stage switching elements") Q1, Q3, Q5 are ON, OFF, OFF and the switching elements of the lower arm (hereinafter referred to as "lower stage switching elements") Q2, Q4, Q6 are OFF, ON, ON. In this case, the current flows to the motor M in a path indicated by an arrow, and the U-phase current flows to the current detection resistor R, The voltage generated at both ends of the current detection resistor R by the U-phase current is inputted to the CPU 4 through the amplifier circuit 5 (Fig. 14), and is AD converted in the CPU 4, so that the U-phase current value is detected.

As shown in Fig. 16, the detection of the W-phase current is carried out in the period in which the upper stage switching elements Q1, Q3, Q5 are ON, ON, OFF and the lower stage switching elements Q2, Q4, Q6 are OFF, OFF, ON. In this case, the current flows to the motor M in a path indicated by an arrow, and the W-phase current flows to the current detection resistor R. The voltage generated at both ends of the current detection resistor R by the W-phase current is inputted to the CPU 4 through the amplifier circuit 5 (Fig. 14), and is AD converted in the CPU 4, so that the W-phase current value is detected.

The V-phase current value is obtained by calculation from the U-phase current value and the W-phase current value. In other words, the following relationship is satisfied with lu as the U-phase current value, lv as the V-phase current value, and lw as the W-phase current value. lu + lv + lw = 0. Therefore, the V-phase current value lv can be calculated as lv = -(lu + lv).

In the motor drive device described above, the switching elements Q1 to Q6 may remain in the ON state due to abnormality of the element itself, and may not return to the OFF state. Even if the element itself is normal, the switching elements Q1 to Q6 may remain in the ON state and may not return to the OFF state if the driver IC3 that provides the PWM signal to the element and the CPU 4 are abnormal and continue to output the ON signal. The fault in which the switching elementsQ1 to Q6 remain in the ON state is called the "ON fault" below.

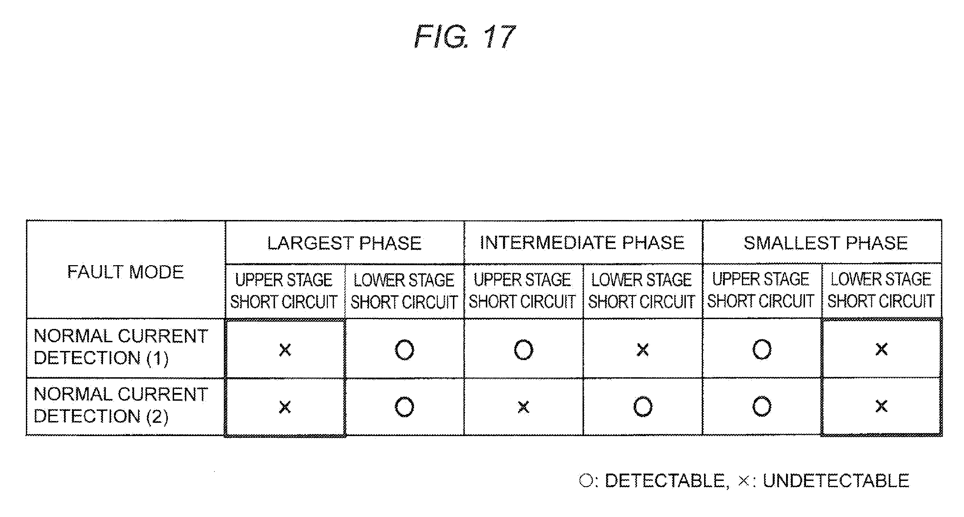

Fig. 17 is a table showing the ON fault detectability of the upper stage switching element and the lower stage switching element for each phase. An "upper stage short-circuit" means the ON fault of the upper stage switching elements Q1, Q3, Q5, and a "lower stage short-circuit" means the ON fault of the lower stage switching elements Q2, Q4, Q6. A "normal current detection (1)" means current detection at the timing of Fig. 15, and a "normal current detection (2)" means current detection at the timing of Fig, 16.

In Fig. 17, the details on the ON fault detectability in the case of the normal current detection (1) are as follows,

For the largest phase (U-phase), the upper stage switching element Q1 is in the ON state as shown in Fig. 15 and the normal operation and the upper stage short-circuit cannot be distinguished, and hence the upper stage short-circuit cannot be detected. On the other hand, since the lower stage switching element Q2 is in the OFF state at the time of normal operation, an overcurrent flows to the current detection resistor R through the elements Q1. Q2 when the ON fault occurs in the element Q2, and hence the lower stage short-circuit can be detected.

For the intermediate phase (V-phase), since the upper stage switching element Q3 is in the OFF state at the time of normal operation as shown in Fig. 15, an overcurrent flows to the current detection resistor R through the elements Q3, Q4 when the ON fault occurs in the element Q3, and hence the upper stage short-circuit can be detected. On the other hand, the lower stage switching element Q4 is in the ON state and the normal operation and the lower stage short-circuit cannot be distinguished, and hence the lower stage short-circuit cannot be detected.

For the smallest phase (W-phase), since the upper stage switching element Q5 is in the OFF state at the time of normal operation as shown in Fig. 15, an overcurrent flows to the current detection resistor R through the elements Q5, Q6 when the ON fault occurs in the element Q5, and hence the upper stage short-circuit can be detected. On the other hand, the lower stage switching element Q6 is in the ON state and the normal operation and the lower stage short-circuit cannot be distinguished, and hence the lower stage short-circuit cannot be detected.

The details on the ON fault detectability in the case of the normal current detection (2) are as follows.

For the largest phase (U-phase), the upper stage switching element Q1 is in the ON state as shown in Fig. 16 and the normal operation and the upper stage short-circuit cannot be distinguished, and hence the upper stage short-circuit cannot be detected. On the other hand, since the lower stage switching element Q2 is in the OFF state at the time of normal operation, an overcurrent flows to the current detection resistor R through the elements Q1, Q2 when the ON fault occurs in the element Q2, and hence the lower stage short-circuit can be detected.

For the intermediate phase (V-phase), the upper stage switching element Q3 is in the ON state as shown in Fig. 16 and the normal operation and the upper stage short-circuit cannot be distinguished, and hence the upper stage short-drcuit cannot be detected. On the other hand, since the lower stage switching elements Q4 is in the OFF state, an overcurrent flows to the current detection resistor R through the elements Q3, Q4 when the ON fault occurs in the element Q4. and hence the lower stage short-circuit can be detected.

For the smallest phase (W-phase), since the upper stage switching element Q5 is in the OFF state at the time of normal operation as shown in Fig. 16, an overcurrent flows to the current detection resistor R through the elements Q5, Q6 when the ON fault occurs in the element Q5, and hence the upper stage short-circuit can be detected. On the other hand, the lower stage switching element Q6 is in the ON state and the normal operation and the lower stage short-circuit cannot be distinguished, and hence the lower stage short-circuit cannot be detected.

### SUMMARY

Therefore, when detecting the motor current at two timings of the normal current detections (1), (2) using the single current detection resistor R, there are problems in that the ON fault of the upper stage switching element Q1 (upper stage short-circuit) of the largest phase (U-phase) and the ON fault of the lower stage switching element Q6 (lower stage short-circuit) of the smallest phase (W-phase) cannot be detected, as shown with a bold frame in Fig. 17.

The present invention has been devised to solve the problems described above, and an object thereof is to provide a motor drive device capable of detecting the ON faust of the upper stage switching elements and the lower stage switching elements for all phases even when using a single current detection unit.

In accordance with one aspect of the present invention, there is provided a motor drive device including: a drive unit, in which at least three sets of a pair of upper and lower arms having switching elements on the upper arm and the lower arm are arranged, for driving a motor based on an ON/OFF operation of each of the switching elements by a PWM (Pulse Width Mediation) signal; a single current detection resistor for detecting current flowing to the drive unit; and a control unit for detecting a current value of the current flowing to each of phases of the motor based on the current flowing to the current detection resistor, and outputting the PWM signal to each of the switching elements based on a target current value of each of the phases and the detected current value of each of the phases; wherein the control unit further includes, an upper stage regeneration abnormality determination unit for detecting the current flowing to the current detection resistor in an upper stage regeneration state, in which the switching elements of the upper arm of all of the phases are in an ON state and the switching elements of the lower arm of all of the phases are in an OFF state, and determining abnormality based on the detection result, and a lower stage regeneration abnormality determination unit for detecting the current flowing to the current detection resistor in a lower stage regeneration state, in which the switching elements of the upper arm of all of the phases are in the OFF state and the switching elements of the lower arm of all of the phases are in the ON state, and determining abnormality based on the detection result.

### BRIEF DESCRIPTION OF THE DRAWINGS

Fig. 1 is a diagram showing a basic configuration of a motor drive device according to the present invention;
Fig. 2 is a diagram describing a timing of current detection in the present invention;
Fig. 3 is a table showing the ON fault detectability for each phase in the present invention;
Fig. 4 is a diagram showing a current path in a normal current detection (1);
Fig. 5 is a diagram showing a current path in a normal current detection (2);
Fig. 6 is a diagram showing a current path in an upper stage regeneration state (normal time);
Fig. 7 is a diagram showing a current path in an upper stage regeneration state (fault time);
Fig. 8 is a diagram showing a current path in a lower stage regeneration state (normal time);
Fig. 9 is a diagram showing a current path in a lower stage regeneration state (fault time);

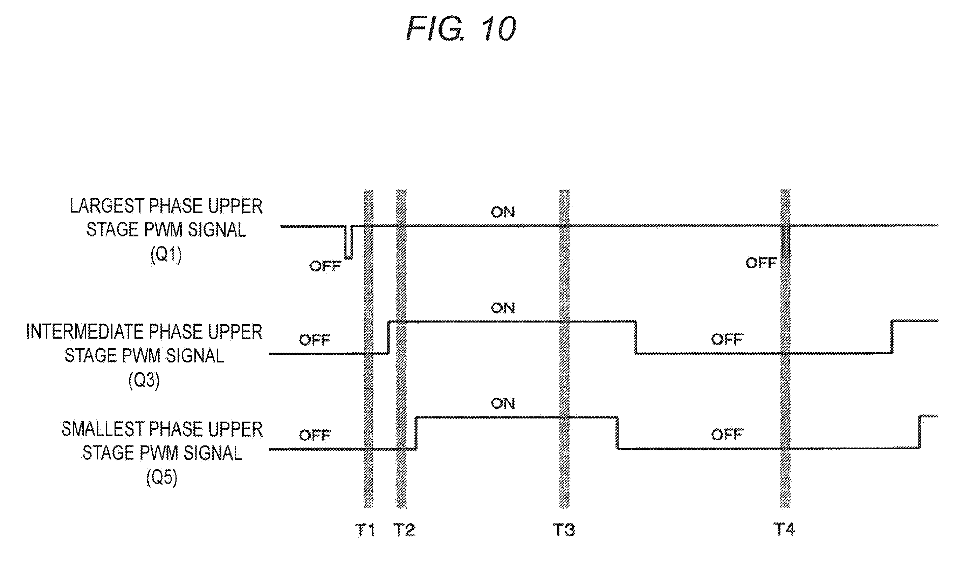

Fig. 10 is a diagram describing current detection when duty of a PWM signal is around 100%;
Fig. 11 is a diagram describing current detection when the duty of the PWM signal is around 0%;
Fig. 12 is a diagram describing detection of earth fault at the time of lower stage regeneration;
Fig. 13 is a diagram describing detection of power supply short circuit fault
   (power supply fault) at the time of lower stage regeneration;
Fig. 14 is a diagram showing one example of a motor drive device of a PWM control method using a signal current detection resistor;
Fig. 15 is a diagram describing the detection of a U-phase current;
Fig. 16 is a diagram describing the detection of a W-phase current; and
Fig. 17 is a table showing an ON fault detectability for each phase in the prior art.

### DETAILED DESCRIPTION

Hereinafter, preferred embodiments of the present invention will be described with reference to the drawings. A circuit configuration of a motor drive device is the same as that shown in Fig. 14. Therefore, Fig. 14 will be cited for the embodiment of the present invention. Each unit of Fig. 14 has already been described, and thus the detailed description thereof will not be given.

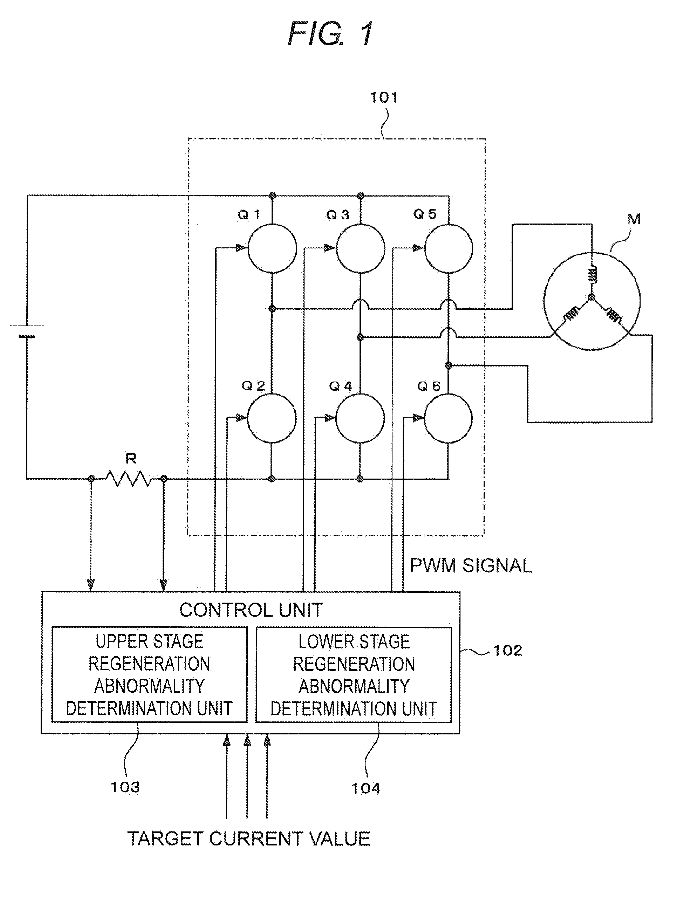

The correspondence relationship of Fig. 1 and Fig. 14 is as follows. A drive unit 101 of Fig. 1 corresponds to the switching circuit 2 of Fig. 14. A control unit 102 of Fig. 1 corresponds to one part of the circuit including the driver IC3, the CPU 4, and the amplifier circuit 5 of Fig. 14. Each function of an upper stage regeneration abnormality determination unit 103 and a lower stage regeneration abnormality determination unit 104 of Fig. 1 is provided to the CPU 4 of Fig. 14.

The detection of the motor current in the present invention and the detection of the ON fault of the switching elements will now be described.

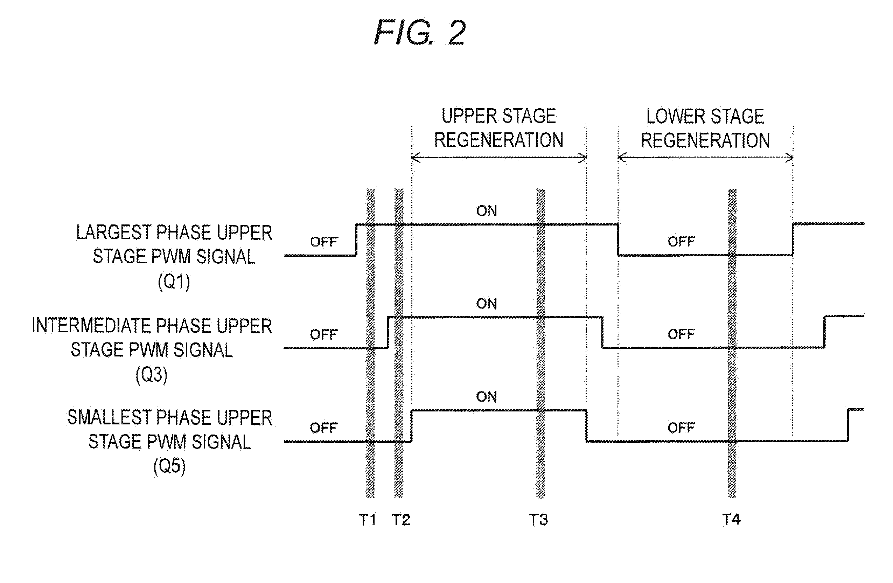

Fig. 2 is a diagram describing a timing of detecting the current that flows to the current detection resistor R. The current detection is performed in four timings T1 to T4. The term "timing" as used herein means a "period" having a time width (e.g., 2 µsec) in which the current can be detected.

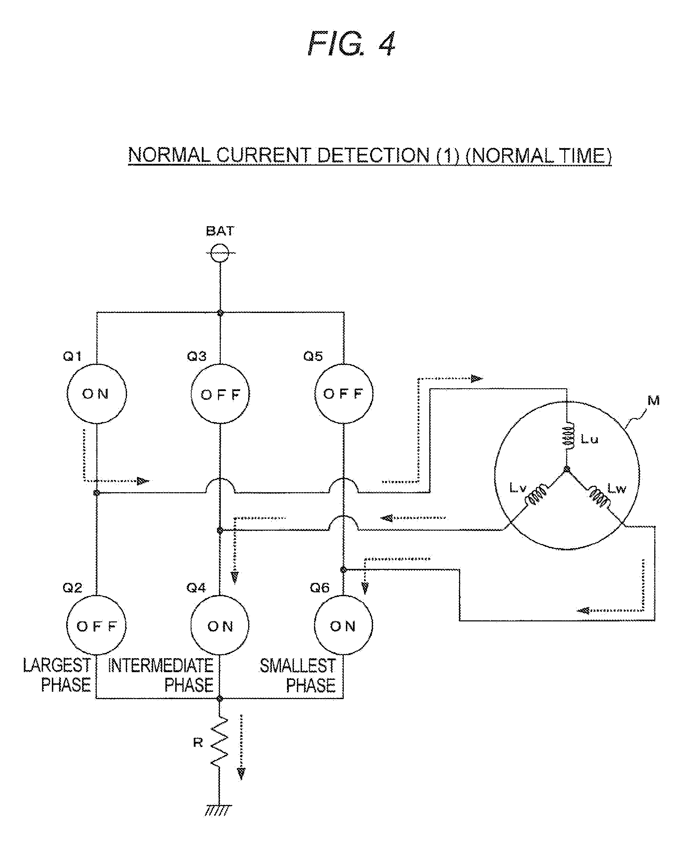

T1 is the timing of normal current detection (1) described in Fig. 15. At such a timing T1, the current of largest phase (U-phase herein) flows to the current detection resistor R when the upper stage switching element Q1 is ON, Q3 is OFF, and Q5 is OFF. The current path of each phase in this case is as shown with a broken line in Fig. 4. Lu, Lv, and Lw in Fig. 4 indicate the wiring of the U-phase, the V-phase, and the W-phase of the motor M, and BAT is the power supply (same in the following figures). The voltage generated at both ends of the resistor R by the current flowing to the current detection resistor R is inputted to the CPU 4 through the amplifier circuit 5 (Fig. 14) and is AD converted in the CPU 4, so that the U-phase current value is detected.

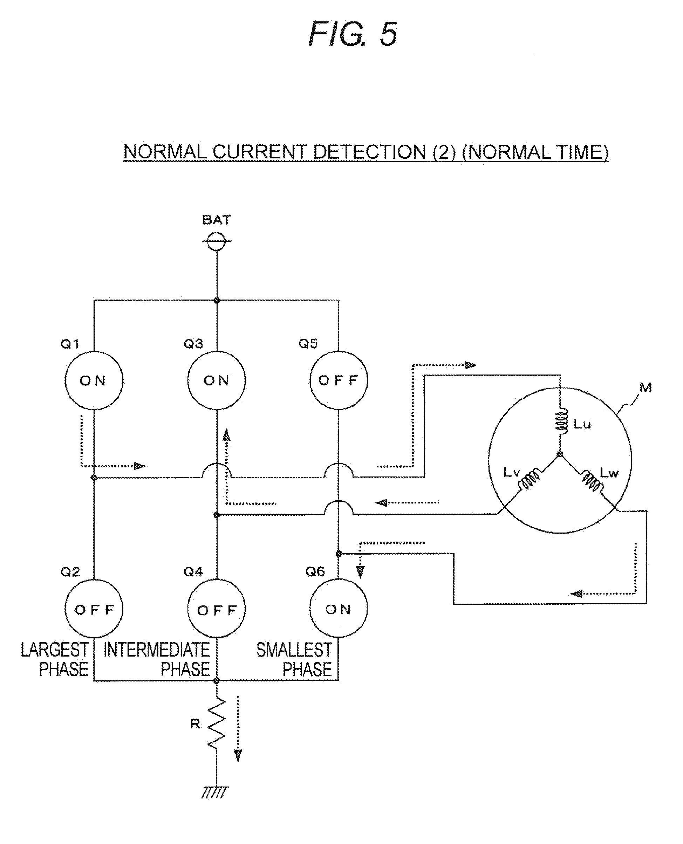

T2 is the timing of normal current detection (2) described in Fig. 16. At such a timing T2, the current of smallest phase (W-phase herein) flows to the current detection resistor R when the upper stage switching element Q1 is ON, Q3 is ON, and Q5 is OFF. The current path of each phase in this case is as shown with a broken line in Fig. 5. The voltage generated at both ends of the resistor R by the current flowing to the current detection resistor R is inputted to the CPU 4 through the amplifier circuit 5 (Fig. 14) and is AD converted in the CPU 4, so that the W-phase current value is detected.

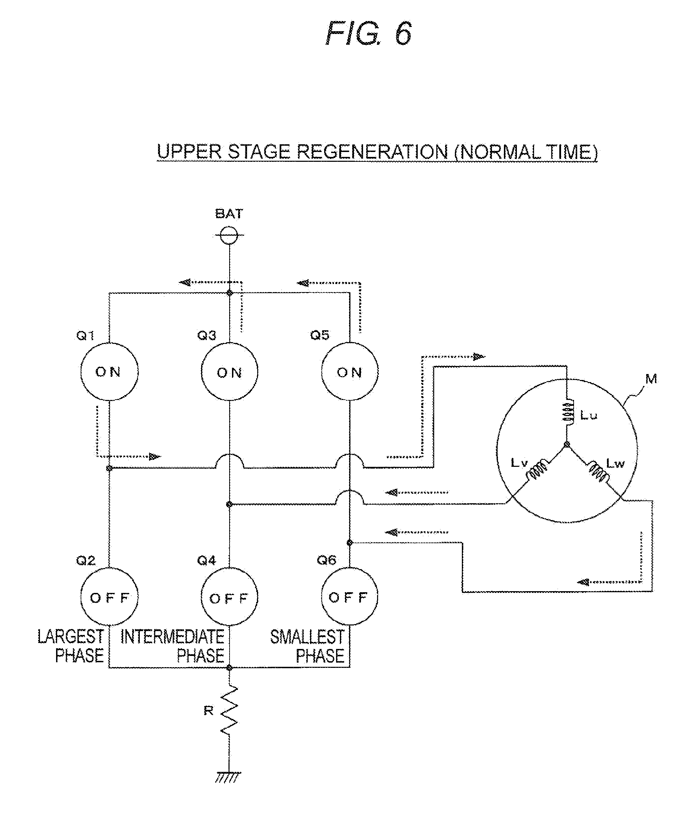

T3 is a timing of upper stage regeneration current detection newly added in the present invention. At such a timing T3, the current flowing to the current detection resistor R is detected in the upper stage regeneration state in which all of the upper stage switching elements Q1, Q3, Q5 are in the ON state (in this case, all of the lower stage switching elements Q2, Q4, Q6 are in the OFF state) The current path in the upper stage regeneration state at normal time is as shown in Fig. 6. In other words, the regenerative current based on the electric energy accumulated in the wiring Lu, Lv, Lw of the motor M flows through the path shown with a broken line by way of the upper stage switching elements Q1. Q3, Q5, and current does not flow to the current detection resistor R.

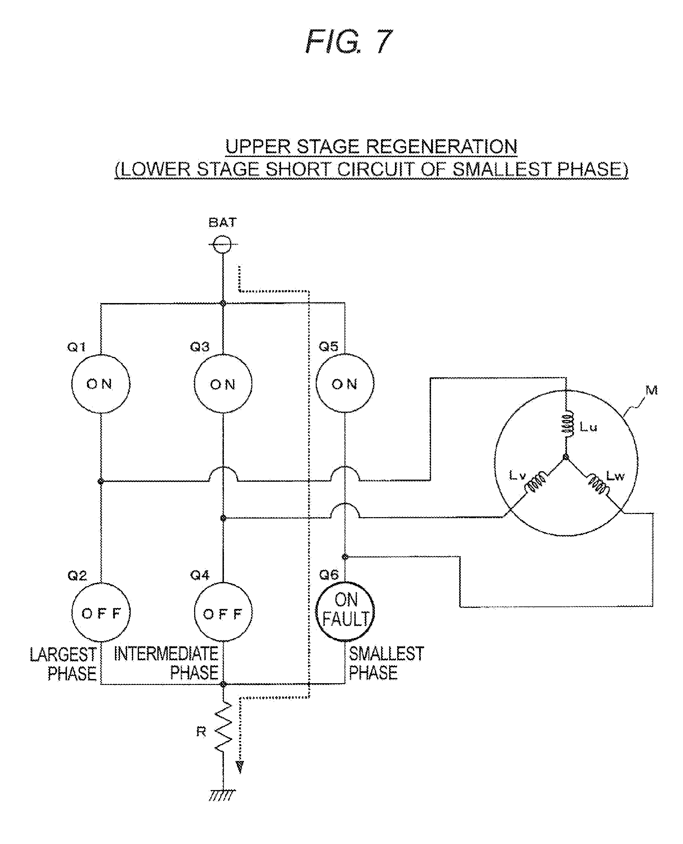

If the ON fault occurs in the lower stage switching elements such as the lower stage switching element Q6 of the smallest phase (W-phase), the switching elements Q5, Q6 are both turned ON, as shown in Fig. 7. The current that does not originally flow from the power supply BAT through the switching elements Q5, Q6 flows to the current detection resistor R in the path shown with a broken line. This is the same when the ON fault occurs in the switching elements Q2, Q4. Therefore, the ON fault of the lower stage switching elements Q2, Q4, Q6 can be detected by detecting the current, In this case, the upper stage regeneration abnormality determination unit 103 (Fig. 1) determines as abnormal (ON fault of lower stage switching element) when the current value of the current flowing to the current detection resistor R at the time of upper stage regeneration is greater than or equal to a predetermined value,

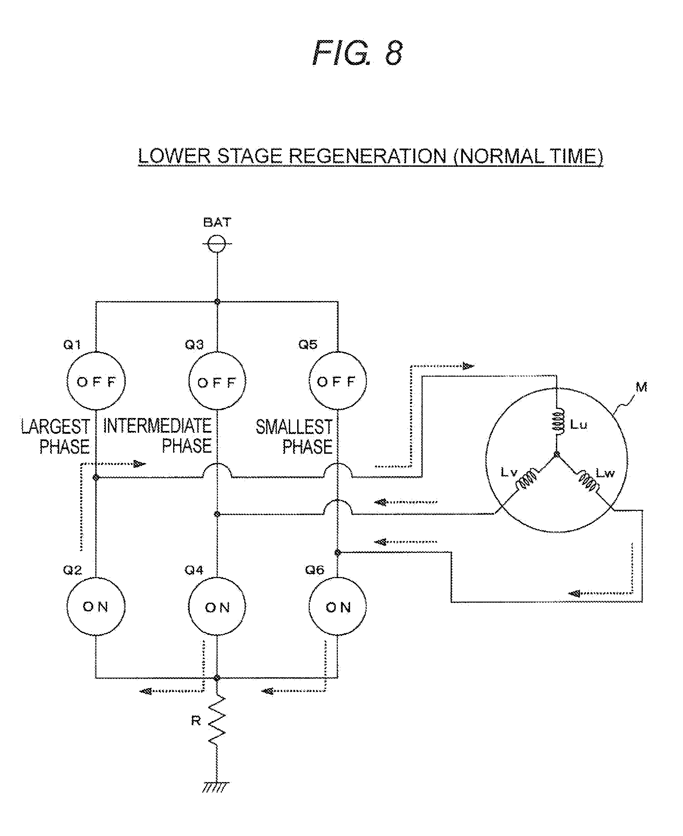

T4 is a timing of lower stage regeneration current detection newly added in the present invention. At such a timing T4, the current flowing to the current detection resistor R is detected in the lower stage regeneration state in which all of the upper stage switching elements Q1, Q3, Q5 are in the OFF state (in this case, all of the lower stage switching elements Q2, Q4, Q6 are in the ON state). The current path in the lower stage regeneration state at normal time is as shown in Fig. 8. In other words, the regenerative current based on the electric energy accumulated in the wiring Lu, Lv, Lw of the motor M flows through the path shown with a broken line by way of the lower stage switching elements Q2, Q4, Q6, and current does not flow to the current detection resistor R.

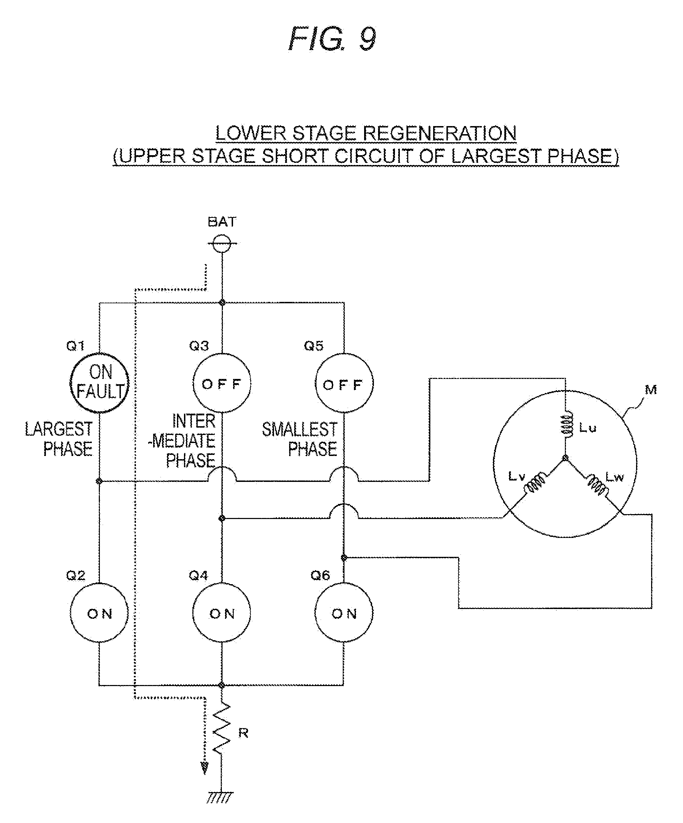

If the ON fault occurs in the upper stage switching elements such as the upper stage switching element Q1 of the largest phase (U-phase), the switching elements Q1, Q2 are both turned ON, as shown in Fig. 9. The current that does not originally flow from the power supply BAT through the switching elements Q1, Q2 flows to the current detection resistor R in the path shown with a broken line, This is the same when the ON fault occurs in the switching elements Q3, Q5. Therefore, the ON fault of the upper stage switching elements Q1, Q3, Q5 can be detected by detecting the current, In this case, the lower stage regeneration abnormality determination unit 104 (Fig. 1) determines as abnormal (ON fault of upper stage switching element) when the current value of the current flowing to the current detection resistor R at the time of lower stage regeneration is greater than or equal to a predetermined value.

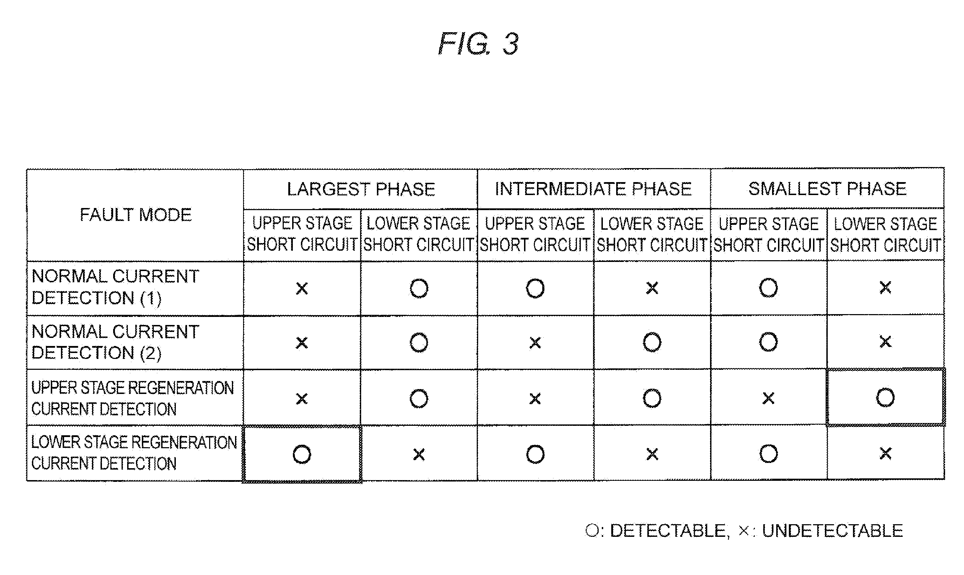

Fig. 3 is a table showing the ON fault detectability of the upper stage switching elements and the lower stage switching elements for each phase. Similar to Fig. 17. the "upper stage short-circuit" means the ON fault of the upper stage switching elements Q1, Q3, Q5, and the "lower stage short-circuit" means the ON fault of the lower stage switching elements Q2, Q4, Q6,

The ON fault detectability in the case of the normal current detection (1) and the ON fault detectability in the case of the normal current detection (2) are the same as Fig. 17, and thus the description thereof will not be given.

The ON fault detectability in the case of the upper stage regeneration current detection is as follows. At the time of upper stage regeneration, all of the upper stage switching elements Q1, Q3, Q5 are in the ON state, as shown in Fig. 6, and the normal operation and the upper stage short circuit cannot be distinguished, and thus the upper stage short circuit cannot be detected for all of the phases. On the other hand, if all of the lower stage switching elements Q2, Q4, Q6 are in the OFF state, as described above, the overcurrent flows to the current detection resistor R when ON fault occurs in any one of the lower stage switching elements (Fig. 7), and thus the lower stage short circuit can be detected.

The ON fault delectability in the case of the lower stage regeneration current detection is as follows. At the time of lower stage regeneration, all of the lower stage switching elements Q2, Q4, Q6 are in the ON state, as shown in Fig. 8, and the normal operation and the lower stage short circuit cannot be distinguished, and thus the lower stage short circuit cannot be detected for all of the phases. On the other hand, if all of the upper stage switching elements Q1, Q3, Q5 are in the OFF state, as described above, the overcurrent flows to the current detection resistor R when ON fault occurs in any one of the upper stage switching elements (Fig. 9), and thus the upper stage short circuit can be detected.

Therefore, according to the present embodiment, the current detection is performed at the time of upper stage regeneration and at the time of lower stage regeneration, in addition to the normal current detection (1) and the normal current detection (2). Thus, the ON fault of the upper stage switching element Q1 of the largest phase (Fig. 9) and the ON fault of the lower stage switching element Q6 of the smallest phase (Fig. 7) can be detected, as shown with a bold frame in Fig. 3. As a result, the ON fault of the upper stage switching elements Q1, Q3, Q5 and the ON fault of the lower stage switching elements Q2, Q4, Q6 can be detected with respect to all the phases.

As shown in Fig, 10, if the duty of the upper stage PWM signal of the largest phase is around 100%, the OFF period of the PWM signal becomes shorter than the time width of the timing T4, and current detection at the time of lower stage regeneration becomes impossible. As a result, the ON fault of the upper stage switching element Q1 of the largest phase cannot be detected. However, a state in which the duty of the upper stage PWM signal of the largest phase is around 100% indicates that the upper stage switching element Q1 of the largest phase is always substantially the ON state. That is, originally, this state cannot be distinguished from the ON fault of the upper stage switching element Q1, and thus the necessity of detecting the ON fault at timing T4 is low.

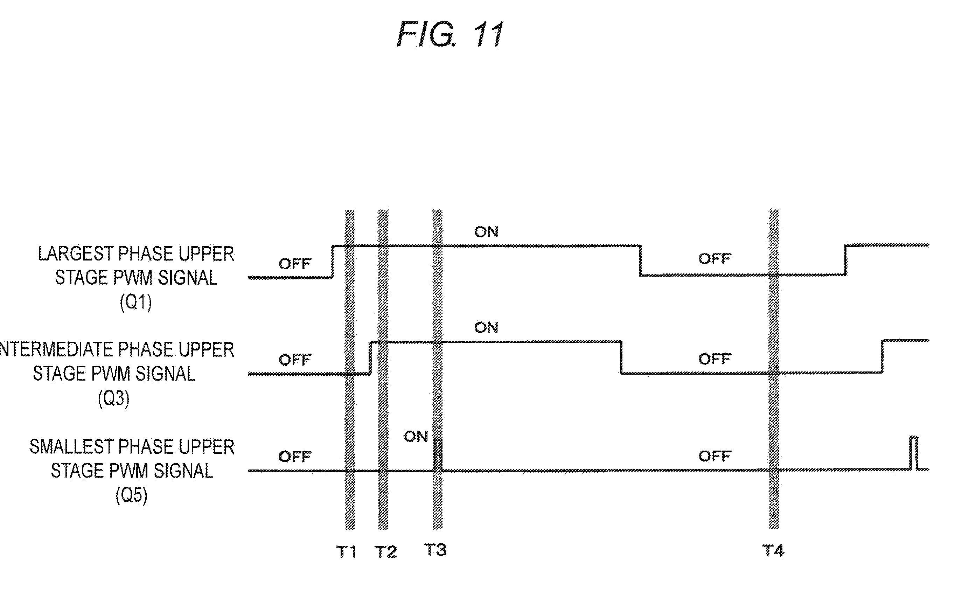

Furthermore, as shown in Fig. 11, if the duty of the upper stage PWM signal of the smallest phase is around 0%, the ON period of the PWM signal becomes shorter than the time width of the timing T3, and current detection at the time of upper stage regeneration becomes impossible. As a result, the ON fault of the lower stage switching element Q6 of the smallest phase cannot be detected. However, a state in which the duty of the upper stage PWM signal of the smallest phase is around 0% (duty of lower stage PWM signal is around 100%) indicates that the lower stage switching element Q6 of the smallest phase is always substantially the ON state. That is, originally, this state cannot be distinguished from the ON fault of the lower stage switching element Q6, and thus the necessity of detecting the ON fault at timing T3 is low.

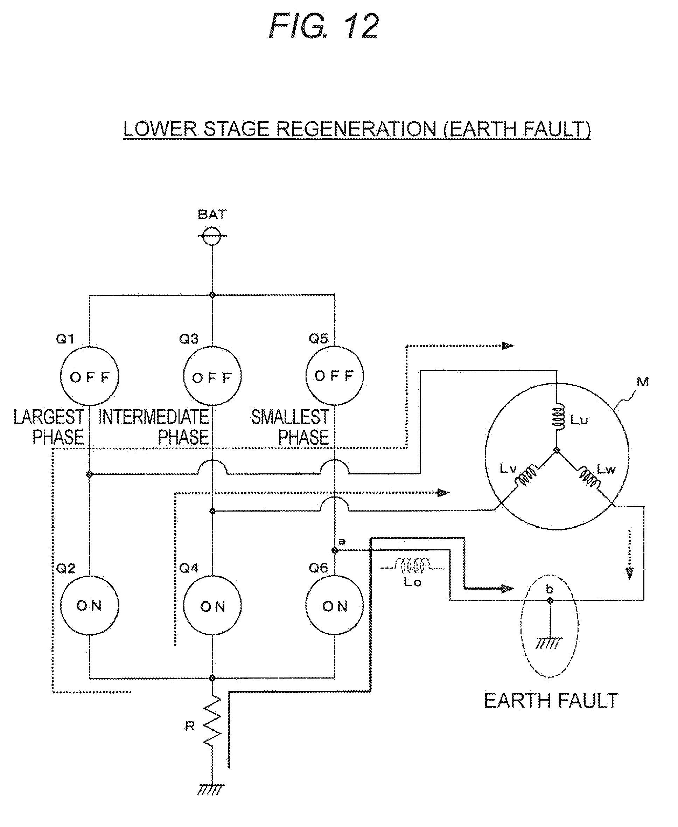

Fig. 12 is a diagram describing the detection of earth fault at the time of lower stage regeneration. As shown in the figure, current as shown with a solid lien arrow and a broken line arrow flows at the time of lower stage regeneration when earth fault occurs at a terminal of the smallest phase (W-phase) of the motor M. The current shown with a solid lien arrow is a negative current directly reaching the earth point b without passing the motor M in which the electric energy accumulated in the parasitic inductance Lo existing between the connection point a of the switching elements Q5, Q6 and the earth point b is discharged through a closed circuit of the current detection resistor R - switching element Q6 - ground. The earth fault can be detected by detecting the negative current, In this case, the lower stage regeneration abnormality determination unit 104 (Fig. 1) determines as abnormality (earth fault of motor) when flow of the current, of greater than or equal to a predetermined value in the direction from the resistor to the motor M, to the current detection resistor R is detected in the lower stage regeneration state, The earth fault can be detected as described above, when the earth fault occurs in other phases.

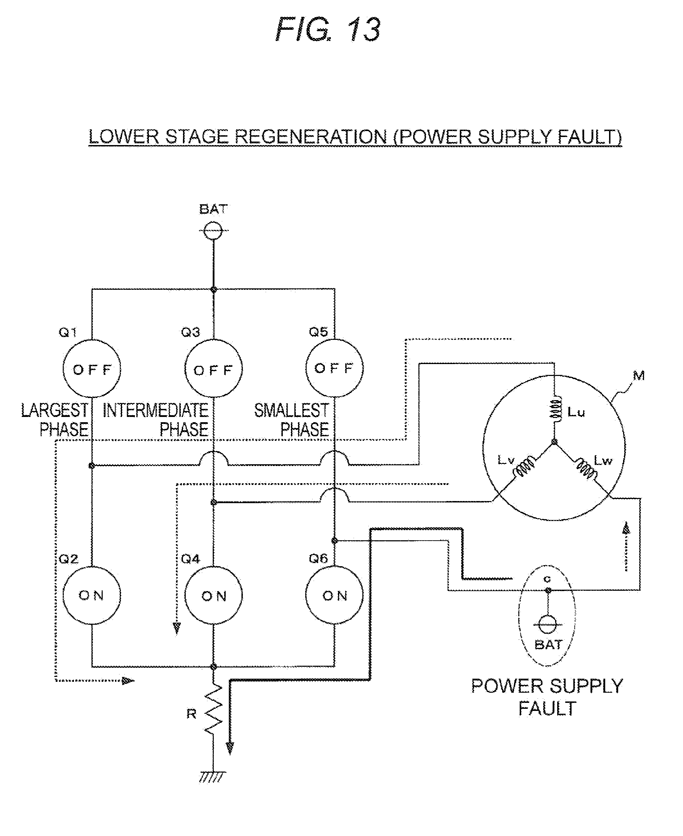

Fig. 13 is a diagram describing the detection of power supply short circuit fault (hereinafter referred to as "power supply fault") at the time of lower stage regeneration, As shown in the figure, when the power supply fault occurs at the terminal of the smallest phase (W-phase) of the motor M, the current as shown with a solid line arrow and a broken line arrow flows at the time of lower stage regeneration. The current shown with the solid line arrow is a positive current reaching the current detection resistor R from the power supply point c (power supply BAT) through the switching element Q6, The power supply fault can be detected by detecting the positive current. In this case, the lower stage regeneration abnormality determination unit 104 (Fig. 1) determines as abnormal (power supply fault of motor) when the current, of greater than or equal to a predetermined value in the direction from the motor M to the resistor, to the current detection resistor R is detected in the lower stage regeneration state. The earth fault can be similarly detected when the earth fault occurs in other phases. The power supply fault can be detected as described above, when the power supply fault occurs in other phases.

Therefore, according to the present embodiment, the earth fault and the power supply fault of the motor M can be detected by detecting the current flowing to the current detection resistor R at the time of lower stage regeneration.

In the present invention, various embodiments other than the above can be adopted. For instance, in the embodiment, the FET is used for the switching elements Q1 to Q6, but other switching elements such as IGBT (Insulated Gate Bipolar mode Transistor) may be used.

In the above embodiment, a case in which the U-phase is the largest phase, the V-phase is the intermediate phase, and the W-phase is the smallest phase has been described, but this is merely an example, and the present invention can be applied even to cases in which the combination of each phase and the largest phase, the intermediate phase, and the smallest phase is arbitrary, such as to a case in which the U-phase is a smallest phase, the V-phase is an intermediate phase, and the W-phase is a largest phase, or a case in which the U-phase is the intermediate phase, the V-phase is the smallest phase, and the W-phase is the largest phase.

In the above embodiment, the lower stage switching elements are turned OFF when the upper stage switching elements are turned ON, but a dead time may be provided between the ON/OFF timing of the upper stage switching elements and the ON/OFF timing of the lower stage switching elements. That is, the lower stage switching elements may be turned from ON to OFF a predetermined time before the timing the upper stage switching elements are turned from OFF to ON. This is to prevent the upper stage switching elements and the lower stage switching elements from being simultaneously turned ON and the circuit from short circuiting.

In the above embodiment, a three-phase motor has been described for the motor, but the present invention can be applied to a case of driving a multi-phase motor of four or more phases.

Furthermore, in the above embodiment, a brushless motor has been described for the motor, by way of example, but the present invention can be applied to a device for driving an induction motor, a synchronous motor, and the like.

As shown in Fig. 1, a motor drive device according to the present invention includes: a drive unit 101, in which at least three pairs of upper and lower arms having switching elements Q1 to Q6 on the upper arm and the lower arm are arranged, for driving a motor M based on an ON/OFF operation of each of the switching elements by a PWM signal; a single current detection resistor R for detecting current flowing to the drive unit 101; and a control unit 102 for detecting a current value of the current flowing to each phase of the motor M based on the current flowing to the current detection resistor R, and outputting the PWM signal to each of the switching elements Q1 to Q6 based on a target current value of each phase and the detected current value of each phase, The control unit 102 further includes an upper stage regeneration abnormality determination unit 103 and a lower stage regeneration abnormality determination unit 104.

The upper stage regeneration abnormality determination unit 103 detects the current flowing to the current detection resistor R in an upper stage regeneration state, in which the switching elements Q1, Q3, Q5 of the upper arm of all phases are in an ON state and the switching elements Q2, Q4, Q6 of the lower arm of all phases are in an OFF state, and determines abnormality based on the detection result. For instance, determination is made that at least one of the switching elements Q2, Q4, Q6 of the lower arm has ON fault when the current value of the current flowing to the current detection resistor R is greater than or equal to a predetermined value.

The lower stage regeneration abnormality determination unit 104 detects the current flowing to the current detection resistor R in a lower stage regeneration state, in which the switching elements Q1, Q3, Q5 of the upper arm of all phases are in the OFF state and the switching elements Q2, Q4, Q6 of the lower arm of all phases are in the ON state, and determines abnormality based on the detection result. For instance, determination is made that at least one of the switching elements Q1, Q3, Q5 of the upper arm has ON fault when the current value of the current flowing to the current detection resistor R is greater than or equal to a predetermined value,

In the present invention, the current, which is originally not to be flowed, flows to the current detection resistor R when at least one of the lower stage switching elements Q2, Q4, Q6 has ON fault in the upper stage regeneration state in which the upper stage switching elements Q1, Q3, Q5 of each phase are all turned ON. The current, which is originally not to be flowed, also flows to the current detection resistor R when at least one of the upper stage switching elements Q1, Q3, Q5 has ON fault in the lower stage regeneration state in which the lower stage switching elements Q2, Q4, Q6 of each phase are all turned ON. Therefore, the ON fault can be detected for all phases by adding the current detection at the time of upper stage regeneration and at the time of lower stage regeneration to the normal current detection (Figs. 15, 16) of the prior art.

In the present invention, the lower stage regeneration abnormality unit determines as earth fault of the motor when detected that current of greater than or equal to a predetermined value in a direction from the resistor to the motor flowed to the current detection resistor in the lower stage regeneration state.

Accordingly, the earth fault of the motor can be detected using the current detection at the time of lower stage regeneration.

In the present invention, the lower stage regeneration abnormality unit determines as power supply short-circuit fault of the motor when detected that current of greater than or equal to a predetermined value in a direction from the motor to the resistor flowed to the current detection resistor in the lower stage regeneration state.

Accordingly, the power supply short-circuit fault of the motor can be detected using the current detection at the time of lower stage regeneration.

According to the present invention, there is provided a motor drive device capable of detecting the ON fault of the upper stage switching elements and the lower stage switching elements for all phases even when using a single current detection unit.

## Claims

1. A motor drive device comprising:
a drive unit (101), in which at least three sets of a pair of upper and lower arms having switching elements (Q1 to Q6) on the upper arm and the lower arm are arranged, for driving a motor (M) based on an ON/OFF operation of each of the switching elements (Q1 to Q6) by a PWM (Pulse Width Modulation) signal;
a single current detection resistor (R) for detecting current flowing to the drive unit (101); and
a control unit (102) for detecting a current value of the current flowing to each of phases of the motor (M) based on the current flowing to the current detection resistor (R), and outputting the PWM signal to each of the switching elements (Q1 to Q6) based on a target current value of each of the phases and the detected current value of each of the phases; **characterized in that**
the control unit (102) further includes,
an upper stage regeneration abnormality determination unit (103) for detecting the current flowing to the current detection resistor (R) in an upper stage regeneration state, in which the switching elements (Q1, Q3. Q5) of the upper arm of all of the phases are in an ON state and the switching elements (Q2, Q4, Q6) of the lower arm of all of the phases are in an OFF state, and determining abnormality based on the detection result, and
a lower stage regeneration abnormality determination unit (104) for detecting the current flowing to the current detection resistor (R) in a lower stage regeneration state, in which the switching elements (Q1, Q3, Q5) of the upper arm of all of the phases are in the OFF state and the switching elements (Q2, Q4, Q6) of the lower arm of all of the phases are in the ON state, and determining abnormality based on the detection result.

2. The motor drive device according to claim 1, **characterized in that** the upper stage regeneration abnormality unit (103) determines as ON fault when at least one of the switching elements (Q2, Q4, Q6) of the lower arm remains in the ON state in a case where the current value of the current flowing to the current detection resistor (R) is greater than or equal to a predetermined value in the upper stage regeneration state.

3. The motor drive device according to claim 1, **characterized in that** the lower stage regeneration abnormality unit (104) determines as ON fault when at least one of the switching elements (Q1, Q3, Q5) of the upper arm remains in the ON state in a case where the current Value of the current flowing to the current detection resistor (R) is greater than or equal to a predetermined value in the lower stage regeneration state.

4. The motor drive device according to claim 1, **characterized in that** the lower stage regeneration abnormality unit (104) determines as earth fault of the motor (M) when detected that current of greater than or equal to a predetermined value in a direction from the resistor to the motor (M) flowed to the current detection resistor (R) in the lower stage regeneration state.

5. The motor drive device according to claim 1, **characterized in that** the lower stage regeneration abnormality unit (104) determines as power supply short-circuit fault of the motor (M) when detected that current of greater than or equal to a predetermined value in a direction from the motor (M) to the resistor flowed to the current detection resistor (R) in the lower stage regeneration state.
